# EUROPÄISCHE PATENTSCHRIFT

(11) **EP 1 401 626 B1**
(45) Veröffentlichungstag und Bekanntmachung des Hinweises auf die Patenterteilung: **10.11.2004**
(21) Anmeldenummer: 02780740.3
(22) Anmeldetag: 09.04.2002
(51) Int. Cl.: B29C 33/38

(54) **FORMWERKZEUG ZUR HERSTELLUNG EINES BAUTEILS MIT EINER MEMBRAN**
FORM TOOL COMPRISING A MEMBRANE AND USED TO PRODUCE A COMPONENT
OUTIL DE FACONNAGE DOTE D'UNE MEMBRANE, POUR LA FABRICATION D'UN ELEMENT STRUCTURAL

(30) Priorität: 19.06.2001 DE 10129223
(43) Veröffentlichungstag der Anmeldung: 31.03.2004
(73) Patentinhaber: DaimlerChrysler AG, 70567 Stuttgart (DE)
(72) Erfinder: HERMANN, Andreas, 71116 Gärtringen (DE); ILZHÖFER, Karl-Heinz, 73230 Kirchheim (DE); SCHUH, Thomas, 71336 Waiblingen (DE); WESSE, Thorsten, 71126 Gäufelden (DE)
(86) Internationale Anmeldenummer: PCT/EP2002/003910
(87) Internationale Veröffentlichungsnummer: WO 2002/102565

(56) Entgegenhaltungen:
- EP-A- 0 064 247
- EP-A- 0 445 634
- US-A- 4 708 626

## Beschreibung

Die Erfindung betrifft ein Formwerkzeug nach dem Oberbegriff des Patentanspruchs 1.

Formwerkzeuge zum herstellen von Kunststoffbauteilen, insbesondere aus faserverstärkten Sheet-Molding-Compounds (SMC-Materialien) sind in der Regel als so genannte Tauchkantenwerkzeuge ausgestaltet.

Tauchkantenwerkzeuge bestehen aus zwei Formstempeln, im Weiteren Pressstempel genannt, mit senkrechten Außenkanten, wobei ein Stempel ähnlich einer Hülse über den anderen Stempel fährt. In einen Formhohlraum, der durch die Pressstempel gebildet wird, wird beispielsweise ein SMC-Halbzeug gelegt. Das SMC-Halbzeug umfasst ein definiertes Gewicht von Rohmaterial, das im Allgemeinen Harze, Härter, Füllstoffe und Fasern (insbesondere Glasfasern) umfasst und in Schichten von rechteckigen Matten aufgebaut ist. Die Pressstempel fahren nun übereinander und pressen das Halbzeug so, dass es den Formhohlraum ausfüllt. Die Pressstempel sind beheizbar, so dass der Härter das Harz des Bauteils aushärtet.

In der EP 0 .064 247 A1 wird ein Spritzgusswerkzeug beschrieben, das zum Herstellen von Brillengläsern geeignet ist, bei dem nach dem Spritzgießen ein thermoplastisches Material durch eine elastisch verformbare Fläche des Werkzeuges zu einer asphärischen Fläche geformt wird.

Derartige Formwerkzeuge sind auf Grund ihrer engen Toleranzen sehr aufwendig zu fertigen und somit sehr teuer. Tauchkantenwerkzeuge sind jedoch zur Herstellung von Kunststoffbauteilen deshalb notwendig, da die Gewichtsdosierung von Rohmaterialien im Allgemeinen nicht in der gewünschten Präzision erfolgen kann, die für den Einsatz von sogenannten Quetschkantenwerkzeugen notwendig wäre. Quetschkantenwerkzeuge sind derart aufgebaut, dass die Pressstempel im geschlossenen Zustand plan aufeinander liegen. Dies bedeutet jedoch, dass im geschlossenen Zustand kein Spielraum für einen Nachdruck auf das Halbzeug besteht. Weist das Halbzeug zu wenig Rohmaterial auf, wird das Bauteil nicht richtig abgebildet, was sich in unzureichenden Materialeigenschaften äußert. Befindet sich zu viel Rohmaterial im Formhohlraum, dann wird dieses zwischen die Pressstempel gedrückt, wodurch ein vollständiges Schließen der Stempel verhindert wird.

Die Aufgabe der Erfindung besteht darin, ein Formwerkzeug der oben genannten Art bei verringerten Werkzeugkosten bereitzustellen, durch das Schwankungen des Rohmaterialvolumens und Schwindungen während der Bauteildarstellung ausgleichbar sind.

Die Lösung der Aufgabe besteht in einem Formwerkzeug mit den Merkmalen des Patentanspruchs 1.

Das erfindungsgemäße Formwerkzeug nach Patentanspruch 1 weist mindestens zwei Pressstempel auf. In einem geschlossenen Zustand bilden diese Pressstempel einen Formhohlraum, der die Konturen eines herzustellenden Bauteils ausbildet.

Mindestens ein Pressstempel ist mit einer erfindungsgemäßen Membran versehen,.die sich durch eine Druckeinwirkung bezüglich des Formhohlraums nach innen bewegt und somit das Volumen des Formhohlraums verringert. Auf diese Weise kann ein zusätzlicher Druck auf das Rohmaterial ausgeübt werden und Schwankungen im Volumen des Rohmaterial und Schwindungen des Rohmaterials während der Formgebung ausgeglichen werden.

Besonders bevorzugt wirkt die erfindungsgemäße Membran an Quetschkantenwerkzeugen, deren Pressstempel im geschlossenen Zustand plan aufeinander liegen. Derartige Werkzeuge sind günstig herzustellen, wodurch die Prozesskosten zur Herstellung von SMC-Bauteilen deutlich gesenkt werden.

Die Membran besteht bevorzugt aus einem Metall, das eine hohe Festigkeit, eine hohe Wärmebeständigkeit bei einer hohen Dehnbarkeit aufweist. Besonders geeignet sind Bleche aus hochfesten Stählen oder superplastischen Legierungen (Memory-Matalle). Die Dicke der Membran beträgt üblicherweise zwischen 0,5 mm und 5 mm (Anspruch 2).

Die Membran ist bevorzugt an den Pressstempel geschweißt. Auf diese Weise kann kein Rohmaterial aus dem Formhohlraum austreten. Einige vorteilhafte Membranmaterialien wie superplastische Legierungen eignen sich besser zum Befestigen mit Schrauben oder ähnlichen Befestigungsmitteln. In diesem Fall ist jedoch eine zusätzliche Dichtung z. B. durch Neopren, Kautschuk oder Silikon zweckmäßig (Anspruch 3).

Eine vorteilhafte Erzeugung des Drucks auf die Membran besteht in der Anwendung eines hydraulischen Drucks oder eines Gasdrucks, die durch ein Druckmedium (z. B. Hydrauliköl oder Luft) übertragen werden. Der Druck wird bevorzugt in einem Hohlraum im Pressstempel, bezüglich des Formhohlraums vor der Membran erzeugt. Die Druckerzeugung erfolgt durch eine Hydraulikpumpe oder durch Pressluft bzw. anderen Gasen (Anspruch 4).

Es ist zweckmäßig, das Druckmedium in einem flexiblen Behälter aufzubewahren, der direkt im Kontakt mit der Membran steht. Durch einen Druckaufbau in diesem Behälter wird zugleich die Membran bewegt. Mit dieser Anordnung.wird vermieden, dass das Druckmedium - für den Fall, dass die Membran an den Pressstempel geschraubt ist - in den Formhohlraum gelangt. Die Anforderung an den Pressstempel - der oft aus mehreren Komponenten aufgebaut ist - bezüglich Dichtheit gegenüber der Druckmedien ist so ebenfalls geringer. Dies trägt zur Senkung der Werkzeugkosten bei (Anspruch 5).

Eine weitere vorteilhafte Erzeugung des Druckes auf die Membran erfolgt durch einen Kolben. Der Kolben ist im Pressstempel angeordnet und drückt direkt auf die Membran. Der Kolben ist wie der bereits genannte flexible Behälter und die Membran temperierbar und somit der Temperatur der Pressstempel anpassbar (Anspruch 6).

Die erfindungsgemäße Membran lässt sich auf nahezu alle Arten von Formgebungswerkzeugen anwenden. Zweckmäßig ist sie bei allen Werkzeugen, in denen während der Bauteildarstellung eine Volumenschrumpfung des Bauteilmaterials stattfindet. Dies trifft auf Presswerkzeuge oder Spritzgusswerkzeuge zur Kunststoffverarbeitung, sowie auf Gießwerkzeuge oder Thixomolding, bzw. Thixocasting-Werkzeuge zur Verarbeitung von Leichtmetallen wie Magnesium oder Aluminium zu.

In Folgenden werden vorteilhafte Ausgestaltungen des erfindungsgemäßen Formwerkzeuges am Beispiel eines Presswerkzeuges zur SMC-Herstellung an Hand von vier Figuren näher erläutert.

Es zeigen:
- **Fig. 1**: ein Presswerkzeug mit einer Membran und einer hydraulischen Vorrichtung zur Bewegung der Membran, im geöffneten Zustand,
- **Fig. 2**: ein Presswerkzeug nach Fig. 1 im geschlossenen Zustand,
- **Fig. 3**: ein Presswerkzeug mit einem flexiblen Behälter zur Aufbringung eines hydraulischen Drucks auf eine Membran und
- **Fig. 4**: ein Presswerkzeug mit einem Kolben zum Aufbringen eines Druckes auf eine Membran.

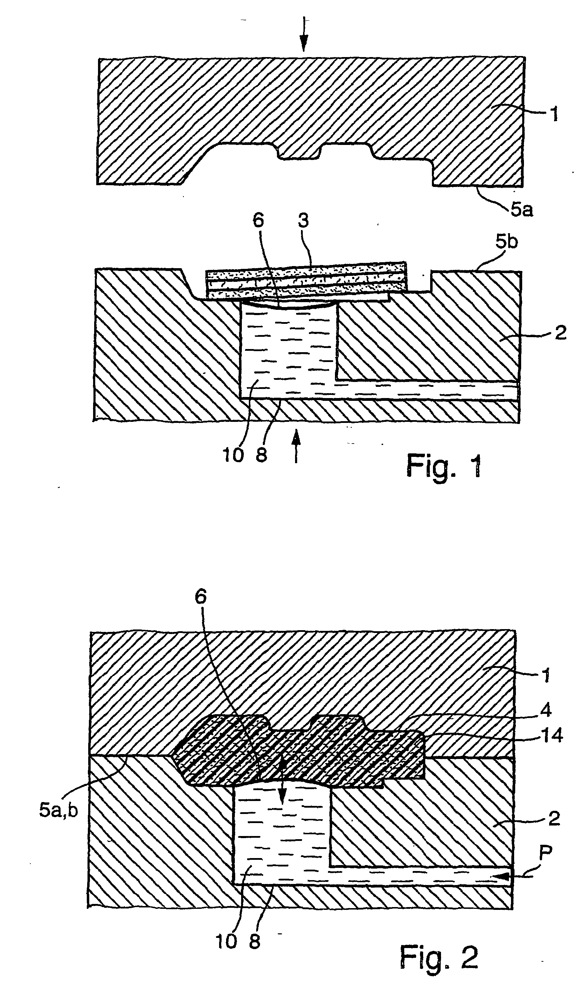

In Figur 1 ist ein Presswerkzeug dargestellt, dass einen oberen Pressstempels 1 und einen unteren Pressstempel 2 umfasst. Der untere Pressstempel 2 enthält eine Membran 6, die an einen Hohlraum B angrenzt und aus elastischem Stahlblech besteht (Dicke 1 mm). Der Hohlraum 8 ist mit einer hydraulischen Flüssigkeit 10 befüllt.

Im unteren Pressstempel 2 ist ein SMC-Halbzeug 3 eingelegt, das aus mehreren Schichten von SMC-Rohmaterial, (umfassend Harz, Binder und Füllstoffe) aufgebaut ist.

Der obere Stempel 1 und der untere Stempel 2 bilden im geschlossenen Zustand (Fig. 2) einen Formhohlraum 4. Der Formhohlraum 4 wird durch die Trennflächen 5a und 5b der Stempel 1 und 2, die im geschlossenen Zustand die Trennebene 5 bilden, vertikal umschlossen.

Das SMC-Halbzeug 3 ist in seinem Volumen so ausgelegt, dass es im geschlossenem Zustand nahezu den Formhohlraum 4 ausfüllt. Da eine vollständige Volumengleichheit des SMC-Halbzeuges 3 und des Formhohlraums 4 unter vertretbaren Maßnahmen bei der Herstellung des SMC-Halbzeuges 3 nicht möglich ist, erfolgt der Volumenausgleich und der Druckaufbau erfindungsgemäß durch die Membran 6.

Das Hydrauliköl 10 im Hohlraum 8 vor der Membran 6 wird durch eine hier nicht dargestellte Hydraulikpumpe unter Druck gesetzt. Die Membran 6 bewegt sich unter der Druckeinwirkung ca. 0,3 mm in Richtung des Formhohlraums 4. Diese Ausdehnung ist ausreichend, um den für eine Bauteilformgebung nötigen Druck im Formhohlraum aufzubringen.

Das Presswerkzeug und die Hydraulikflüssigkeit 10 sind während des Pressvorgangs auf ca. 140° C temperiert. Bei dieser Temperatur kommt es zu einer Aushärtereaktion zwischen einem Härter und einem Harz im Halbzeug 3. Nach dem Aushärtevorgang wird ein SMC-Bauteil 14 aus dem Presswerkzeug entformt.

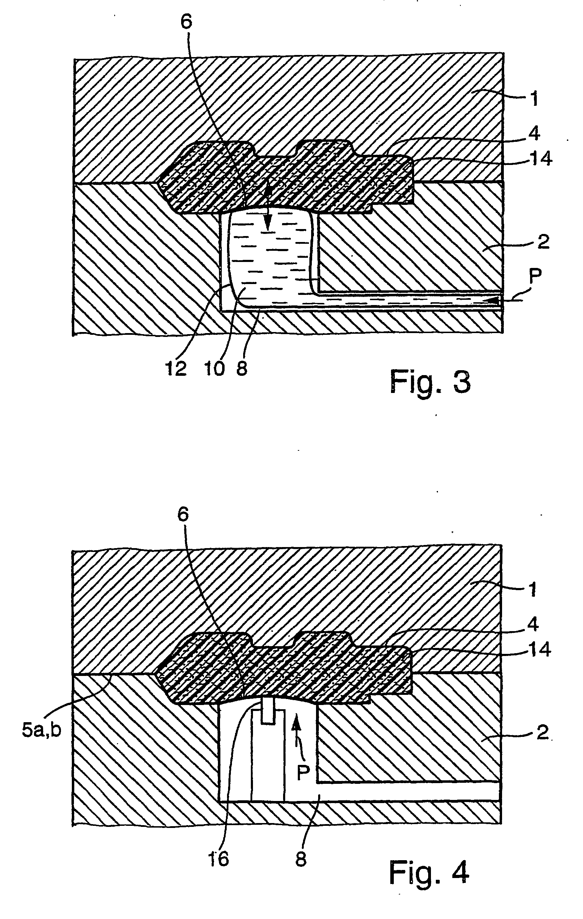

Das Presswerkzeug in Fig. 3 ist analog dem der Fig. 2 aufgebaut, der Unterschied besteht darin, dass der Hohlraum 8 vor der Membran einen Kautschuk-Behälter 12 enthält, in dem sich wiederum Hydrauliköl 10 befindet. Die Membran 6 ist am unteren Stempel 2 mit einer nicht näher dargestellten Schraubverbindungen befestigt. Auf den Kautschuk-Behälter 12 wird über eine Hydraulikpumpe Druck aufgebracht, der in dieser Anordnung weiter auf die Membran wirkt. Der Vorteil dieser Anordnung besteht darin, dass sich das Hydrauliköl 10 in dem geschlossen Behälter 12 befindet und so nicht in den Formhohlraum 4 eindringen kann. Auf eine aufwendige Abdichtung der Membran zwischen dem Formhohlraum 4 und dem Hohlraum 8 kann verzichtet werden.

Eine weitere vorteilhafte Ausgestaltungsform der Erfindung besteht in einem Presswerkzeug nach Fig. 4. Das Presswerkzeug nach Fig. 4 ist analog den Presswerkzeugen nach den Figuren 1 bis 3 aufgebaut, der Hohlraum 8 enthält jedoch anstatt eines Druckmediums einen Kolben 16. Die Membran 6 ist mit dem unteren Stempel 2 verschweißt. Der Kolben 16 drückt auf die Membran 6, wodurch sich diese in Richtung Formhohlraum 4 bewegt und den Druck auf das SMC-Rohmaterial weitergibt. Eine Verschmutzung des Kolbens 16 durch das Rohmaterial im Formhohlraum 4 wird durch diese Anordnung unterbunden, da die Membran 6 eine dichte Barriere darstellt. Die Funktionsweise des Kolbens 16 wird somit nicht beeinträchtigt. Für eine optimale Arbeitsweise kann der Kolben 16 beheizt werden.

## Patentansprüche

1. Formwerkzeug zur Herstellung von Kunststoffbauteilen (14), umfassend mindestens zwei Formstempel (1, 2), die in einem geschlossenen Zustand einen Formhohlraum (4) mit den Konturen des Kunststoffbauteils (14) bilden, wobei mindestens ein Formstempel (1, 2) mindestens eine Membran (6) aufweist, die durch Druckeinwirkung ein Volumen des Formhohlraums (4) verringert
**dadurch gekennzeichnet,**
• **dass** das Formwerkzeug als Presswerkzeug in der Art. ausgestaltet ist, dass formhohlraumfreie Bereiche (5a,b) der Formstempel (1, 2) plan aufeinander liegen,
• ein SMC-Halbzeug (3) umfassend Harz, Härter, Füllstoffe und Fasern in dem Formhohlraum (4) positioniert ist,
• wobei das SMC-Halbzeug (3) den Formhohlraum (4) in einem geschlossenen Zustand nahezu ausfüllt,
• wobei ein Volumenausgleich zwischen dem Formhohlraum (4) und dem SMC-Halbzeug (3) durch die Membran erfolgt
• und das Formwerkzeug zur Aushärtung des SMC-Halbzeugs temperierbar ist.

2. Formwerkzeug nach Anspruch 1,
**dadurch gekennzeichnet,**
**dass** die Membran (6) aus Metall besteht.

3. Formwerkzeug nach Anspruch 1 oder 2,
**dadurch gekennzeichnet,**
**dass** die mindestens eine Membran (6) in den Formhohlraum (4) .geschweißt oder geschraubt ist.

4. Formwerkzeug nach einem der Ansprüche 1 bis 3,
**dadurch gekennzeichnet,**
**dass** die äußere Druckeinwirkung auf die Membran (6) durch Gasdruck oder Hydraulikdruck erfolgt.

5. Formwerkzeug nach Anspruch 4,
**dadurch gekennzeichnet,**
**dass** ein Druckmedium (10) in einem flexiblen Behälter (12) eingeschlossen ist.

6. Formwerkzeug nach einem der Ansprüche 1 bis 3,
**dadurch gekennzeichnet,**
**dass** die äußere Druckeinwirkung auf die Membran (6) durch einen Kolben (16) erfolgt.

## Claims

1. Mould for producing plastic components (14), comprising at least two mould punches (1, 2), which in a closed position form a mould cavity (4) having the contours of the plastic component (14), wherein at least one mould punch (1, 2) has at least one diaphragm (6) which, by the action of pressure, reduces the volume of the mould cavity (4),
**characterized**
• **in that** the mould is designed as a compression mould in such a manner that regions (5a, b) of the mould punches (1, 2) which do not include the mould cavity bear flat against one another,
• an SMC semi-finished product (3) comprising resin, hardener, fillers and fibers is positioned in the mould cavity (4),
• the SMC semi-finished product (3) virtually filling the mould cavity (4) in a closed position,
• volume compensation between the mould cavity (4) and the SMC semi-finished product (3) being effected by the diaphragm,
• and it being possible to control the temperature of the mould in order to cure the SMC semi-finished product.

2. Mould according to Claim 1, **characterized in that** the diaphragm (6) consists of metal.

3. Mould according to Claim 1 or 2, **characterized in that** the at least one diaphragm (6) is welded or screwed into the mould cavity (4).

4. Mould according to one of Claims 1 to 3, **characterized in that** the external action of pressure on the diaphragm (6) is effected by gas pressure or hydraulic pressure.

5. Mould according to Claim 4, **characterized in that** a pressure medium (10) is enclosed in a flexible container (12).

6. Mould according to one of Claims 1 to 3, **characterized in that** the external action of pressure on the diaphragm (6) is effected by a piston (16).

## Revendications

1. Outil de moulage pour la fabrication de composants en plastique (14), comprenant au moins deux matrices de moulage (1, 2) qui forment, dans un état fermé, un espace creux de moulage (4) avec les contours du composant en plastique (14), au moins une matrice de moulage (1, 2) présentant au moins une membrane (6) qui, sous l'effet d'une pression, réduit un volume de l'espace creux de moulage (4),
**caractérisé en ce que**
- l'outil de moulage est réalisé sous forme d'outil de pressage de telle manière que des régions des matrices de moulage (1, 2) en dehors de l'espace creux de moulage (5a, b) se situent à plat l'une sur l'autre,
- un produit semi-fini SMC (3) comprenant de la résine, des durcisseurs, des charges et des fibres est positionné dans l'espace creux de moulage (4),
- le produit semi-fini SMC (3) remplit complètement l'espace creux de moulage (4) dans un état fermé,
- un équilibrage du volume entre l'espace creux de moulage (4) et le produit semi-fini SMC (3) étant réalisé par le biais de la membrane
- et l'outil de moulage pouvant être régulé en température pour le durcissement du produit semi-fini SMC.

2. Outil de moulage selon la revendication 1,
**caractérisé en ce que**
la membrane (6) se compose de métal.

3. Outil de moulage selon la revendication 1 ou 2,
**caractérisé en ce que**
l'au moins une membrane (6) est soudée ou vissée dans l'espace creux de moulage (4).

4. Outil de moulage selon l'une quelconque des revendications 1 à 3,
**caractérisé en ce que**
l'application extérieure de la pression sur la membrane (6) est réalisée par une pression de gaz ou une pression hydraulique.

5. Outil de moulage selon la revendication 4,
**caractérisé en ce qu'**
un fluide de pression (10) est renfermé dans un récipient flexible (12).

6. Outil de moulage selon l'une quelconque des revendications 1 à 3,
**caractérisé en ce que**
l'application extérieure de la pression sur la membrane (6) est réalisée par le biais d'un piston (16).
